# EUROPEAN PATENT APPLICATION

(11) **EP 1 092 752 A2**
(43) Date of publication of application: **18.04.2001**
(21) Application number: 00308237.7
(22) Date of filing: 20.09.2000
(51) Int. Cl.: C08L 23/08, C08L 23/06, C08K 13/02

(54) **Polymer composition**

(30) Priority: 07.10.1999 MX 9909174
(71) Applicant: Servicios Condumex S.A. De C.V., C.P. 76120 Queretaro, QRO (MX)
(72) Inventor: Sanchez, Fernando Labastida, C.P.76120 Queretaro, QRO (MX); Sanchez, Alfonso Perez, C.P.76120 Queretaro, QRO (MX)
(74) Representative: Watkins, Rosalind Philippa

(57) **Abstract**

A polymer composition and preparation process, which includes a mixture of crosslinkable polyolefins with high service temperature thermal coefficient in automotive cables, characterized because it has a better resistance to chemical attack through high temperatures oils of up to 150°C, a better resistance to vertical flame propagation, and an increased abrasion resistance for application in compounds to insulated and cover electrical cables and leads. The polyolefins are a chemical synergistic combination of a halogenated hydrocarbon filler combined with antimony trioxide, an alcoxysilane, a crosslinking agent, a combination of additives as process auxiliary and a combination of three antioxidant agents.

## Description

### Field of the Invention

The invention relates to a polymer composition based on crosslinkable polyolefins with high service thermal coefficient of up to 150°C as insulating element in automotive cables and to the process to promote a polyolefins mixture crosslinkable with halogens that are grafted onto the polymer chain and that through an additive combination confer to the insulating formulation and cover for electric cables and conductors a higher thermal service temperature with characteristics such as: service temperature of 150°C, flame vertical propagation resistance, oil resistance at 136°C, and abrasive resistance.

### Description of the Prior Art.

Several inventions are known that can be applied to the formulation of different types of insulating materials for covering electric cables and conductors, such as, for instance, the curable insulating compositions described in U.S patent 5,401,787 that confer characteristics such as flame retardation and improved water resistance from halogenated ethylene-alkoxysilane anhydride and antimony trioxide copolymers fulfilling SAEJ-1128 standard.

In US patent 5,439,965 crosslinkable compositions are described that are flame and abrasion resistant as insulating elements for wires and cables, based on ethylene-vinyl acetate copolymer, an antimony trioxide and organic peroxide halogenated compound.

In US patent 5,955,525, a formulation is described to insulate and protect electric cables and conductors which is flame resistant with low smoke emission and thermal coefficients of 135°C.

The previous inventions are practically limited to flame or abrasion resistance, but for low service thermal coefficients except in the case of the last mentioned invention, property of the applicant, that operates at product thermal temperature coefficients of up to 135°C.

One of the main applications of the present invention, is that the polymer compositions of crosslinkable polyolefin type with high thermal coefficient offer to the insulation of automotive electric cables and conductors a higher safety in the handling of cables, above all when they are in places where the heating of the engine is high and thus the physical properties and the thermal stability of the compositions should not deteriorate under said operation conditions.

Another of the main applications of the composition is its hot oil resistance, as well as its flame and abrasion resistance.

The compositions are applied as insulating elements in electrical cables and conductors with reduced thicknesses of 0.15-0.40 millimeters according to the standard for low voltage primary cables ISO 6722 class D RENAULT 36-05-009J and for UL cables 150°C according to UL 3321 subject 758. They also fulfill the following specifications DELPHI ESM-3207, ESM-3300 y ESM-3269: CHRYSLER MS-9502, S97 GG 14401AA and FORD WSS 22P7 A4. The compositions show a good balance of the main properties such as processability, physico-mechanical, chemical and electrical properties with flame resistance, oil resistance and abrasion resistance. The main advantages obtained when developing said compositions are: (a) with the additive combination they offer greater thermal stability and thermal class 150°C insulating compounds and/or covers are obtained (b) with the use of flame retardant agents based on halogens that are grafted onto the polymer chain a grater resistance to vertical flame propagation is obtained (c) and color compositions can be obtained.

For the present invention a great variety of antioxidant agents were used such as: 1,2-dihydro-2,2,4 trimethyl quinolein, and combinations of phenols stearically hindered with distearyl 3,3' thio-dipropianate (DSTDP), bis (2,4 di terbutyl) pentaerythritol diphosphite, tris (2,4 diterbutyl phenyl) phosphite, zinc salt 2,mercapto benziimidazol, zinc salt 2-mercapto toluilimidazol, pentaerythritol tetra bis (betalaurylthiopropianate) and dilauryl 3,3' thio-dipropianate.

The combinations of di-alquil-thio-dipropianate with hindered phenols offer high thermal stability.

### DETAILED DESCRIPTION

The polymer composition with characteristics such as resistance to vertical flame propagation, oil resistance, abrasion resistance and mainly with a high thermal stability at service temperatures of up to 150°C, that undergoes long aging periods of 3000 hours up to cable operation temperatures of 150°C ± 3°C and short aging periods of 240 hours at a temperature of 180°C ± 3°C is based on an ethylene and aliphatic carboxylic acid vinyl ester copolymer alone or combined with another series of polyolefins with several active compounds that improve markedly thermal stability, resistance to vertical flame propagation, oil resistance at 136°C and abrasion resistance. The quantities of the compounds are expressed in parts per hundred of resin or the sum of this one plus other resins involved.

Hereinafter the compounds used in the composition of the present invention are qualitatively and quantitatively described.

### Ethylene copolymer

The polymer component of the present composition is an ethylene and C2-6 aliphatic carboxylic acid vinyl ester, such as vinyl acetate, vinyl propionate, vinyl butyrate, vinyl pentanoate or vinyl bexanoate copolymer. The preferably used copolymer is an ethylene and vinyl acetate (EVA) copolymer that can contain vinyl acetate in a ratio of about 3% to 90% and preferably from 3% to 45%, the rest being ethylene. The ethylene, vinyl acetate and other polymerizable olefinic monomer terpolymers can be used in adequate ratio.

It is also possible to use other types of polymers such as polyethylene, polypropylene, ethylene-propylene copolymers and terpolymers and acrylic copolymers. Low density polyethylenes, linear low density polyethylenes and high density polyethylenes have melting indexes of 0.5 to 20 g/10 min to promote uniform and acceptable mixes, especially when the ratios are up to 30% or less of the total polymer composition.

The ethylene copolymers and the mixes show melting indexes within a range of 0.1 to 7 g/10 min. EVA copolymers generally have a melting index of 0.5 to 5 g/10 min.

### Active compounds

### Filler of halogenated organic compounds

The fillers used in the composition of the present invention are bromated organic fillers that do not generate dioxines and furans through combustion and besides are approved by the EPA. (US Environment Protection Agency for the Prevention of Pollution and Regulation of New Toxic Substances Pending of Information Development). The chemical structure of these fillers are formed of a cycloaliphatic ring combined with bromine atoms such as:
octabromotrimethylphenyl indane H₁₈Br₁₂Br₈-Br, 73.7% (melting point: 240°C-256°C) FR-1808®, trademark of Dead Sea Bromine Group.

Monomer pentabromobenzyl acrylate C₁₀H₅Br₅O-Br, 71.8% (melting point: 117-120°C).FR-1025®, trademark of Dead Sea Bromine Group.

Among other halogenated compounds that can be used in the composition, we can mention as reference the following ones:
hexabromobenzene, tetrabromobisphenol A, tetrachlorobisphenol A, tetrabromophtalate anhydride, hexabromo cyclodecane, octabromodiphenyl, perchloropentacyclodecane, octabromodiphenyl ether, decabromodiphenyl ether, tribromo phenyl allyl ether, pentrabromo ethylbenzene, 2,4,6-tribromophenol, pentabromodiphenyl ether, ethylene bis (tetrabromophtalimide), tetrachlorophtalic anhydride, poly (pentabromobenzyl) acylate, tetrabromobisphenol A bis (dobromopropyl) ether, and Diels-Alder by-product of hexachlorocyclopentadiene with maleic anhydride.

The bromated compounds used in the present invention permit to obtain grafts in the polymers used.

### Antimony trioxide

Using antimony trioxide with the bromated compounds a chemical synergistic effect is obtained which improves flame resistance. The ratios used between bromated compounds and antimony trioxide were 2:1 to 5:1 and preferably, 2.5:1 to 4:1. Other types of complementary additives can be used to obtain synergy between the bromated compounds, said additives can be: antimony pentoxide, antimony silicate, boron compounds, tin oxide, zinc oxide, zinc borate, aluminum trioxide, and aluminum trihydroxide.

The flame retardancy grade and the viscosity of the polymeric composition will basically depend on the use of said fillers and the following non-halogenated complementary or inorganic fillers can be included, if required, such as trihydrated alumina (Al₂O₃H₂O or Al(OH)₃), magnesium hydroxide, hydrated calcium silicate, hydrated magnesium carbonates, etc. Said charges are previously treated with an alcoxysilane. As a result of the use of the alcoxysilanes, it is possible to obtain a physico-chemical coupling that offers a better linkage of the filler onto the polymer.

The size of the filler particle shall be according to the rheological characteristics necessary to reach optimum process conditions for the polymeric compositions, and in this way to reach the physico-mechanical and chemical characteristics of flame retardancy necessary to fulfill the application requirements.

### Alcoxysilanes

The alcoxysilanes used were: vinyl trimethoxyethoxysilane, phenyl tris (2methoxyethoxy) silane, methyl triethoxysilane, ethyl methyl tris-(2 methoxyethoxy) silane, dimethyl diethoxysilane ethyl trimethoxysilane and vinyl trimethoxysilane.

The alcoxysilanes especially preferred because they confer better properties to the polymeric composition are:
- vinyl trimethoxyethoxysilane, formula H₂C=CHSi(OCH₂CH₂OCH₃)₃
- vinyl trimethoxysilane, formula H₂C=CHSi(OCH₂CH₃)₃

The ratios between the alcoxysilanes are within the following range: 0.5-5 phr. (parts per hundred of resin).

### Crosslinking agents

The compositions based on ethylene and vinyl acetate can be crosslinked using the normal traditional crosslinking procedure such as wet thermal route and/or radiation. The crosslinking agents used in the present composition are: dicumyl peroxide and alpha, alpha-bis (terbutylperoxy) diisopropylbenzene with the combination of co-agents such as: triallyl cyanurate, triallyl isocyanurate, diallyl maleate, diallyl phtalate, pentaerythritol triacrylate, pentaerythritol tetracrylate, trimethylol propane triacrylate, trimethylol propane, trimethacrylate, tetrethylene glycol dimethacrylate, low molecular weight polybutadiene, and n,n'-m-phenylendimaleic in order to improve the state and crosslinking speed, being alpha,- alpha' bis (terbutylperoxy) diisopropylbenzene peroxide and the co-agent n,n'-m-phenylendimaleic marketed as HVA-2® the ones preferably used for the present invention, the ratios between co-agent and crosslinking agent can be within the following range: 0.5-10phr. The organic peroxides are activated during the vulcanization processes, producing the chemical linking between the chains of the ethylene and vinyl acetate polymer in a three-dimensional matrix of carbon-carbon chains. To carry out the chemical crosslinking in the present invention it is possible to use other crosslinking agents generating free radicals such as 2,5 ― (ter-butylperoxy); 2,5-dimethylexin-3; di-terbutylperoxide; 2,5-(terbutylperoxy)-; -2,5-dimethylexane; ter-butylcumyl peroxide. To select the crosslinking agents it is necessary to take into account the breakdown temperatures of the same in order to avoid undesirable effects during the mixing and extrusion processes, the quantities and/or ratios of the curing agents to be used will be defined according to the application, because the higher the content of the agent in the formula, the following properties will be improved or reduced:
- Higher and/or lower thermal stability after long and short period of aging in oven, and low operation temperatures of 150°C.
- Higher and/or lower resistance to ignition and combustion.
- Higher and/or lower resistance to corrosive chemical fluid attack.
- Higher and/or lower resistance to oils.
- Higher and/or lower abrasion resistance.
- Higher and/or lower dielectric stiffness.
- Higher and/or lower water resistance or gain and/or losses of electrical properties because of water absorption in polymer compositions.

Additive agents to apply the composition as isolating compounds with high thermal coefficient at service temperatures of up to 150°C for electric cables or leads of automotive type, according to ISO standard class D6722, FORD S97G 14404-AA RENAULT 36-05-009/J A4, DELPHI ESM-3300 Y ESM-3269 AND CHRYSLER MS-9502.

### Process additives

The process additives used in the present invention permit the composition to be easily mixed and/or prepared and/or extruded and/or formed. The composition of the process additives include the following components:
- A fatty acid and/or derived of fatty acids referred to a saturated or insaturated C8-C22 aliphatic carboxylic acid, such as stearic acid, caproic acid, isostearic acid, lauric acid, STRUKTOL TR 016® (mixture of metallic soaps of fatty acid with an amide), being the last one especially preferred because of its capacity to promote good rheological properties;
- A low molecular weight silicon oil, being an excellent promoter to avoid the appearance of the compositions on metal surfaces of the mixing, extrusion equipment and mainly on copper electric conductors.
- An aliphatic resin (STRUKTOL TR 060 ®) can be used preferably to improve the dispersion and/or homogeneity of inorganic charges, antioxidants, and crosslinking agents of the polymeric composition.

The fatty acid silicon oil ratios used in each system will be from 1:1 to 1:6, preferably the ratio of fatty acid to silicon oil will be 1:3. With regard to the ratio of aliphatic resin to fatty acid, it will be 1:1 to about 1:6 and preferably the ratio of hydrocarbonated resin to fatty acid will be 1:3. The total quantities of the composition of the process additives will be from 0.25 phr to 8 phr of the total polymeric composition.

### Antioxidant agents

In the present invention antioxidant agents were used that were able to withstand continuous operating temperatures of 150°C ± 3° during 3000 hours and/or aged in oven during 240 hours at a temperature of 180°C ± 3°C. Basically, the invention uses a package of antioxidants able to fulfill the above mentioned requirements and to avoid that the antioxidant used discolor and/or stain the copper of the cable electric conductor, as well as modify the shape of the pigmented compound during the reticulation with polymeric compositions containing said antioxidants.

The especially preferred antioxidants in the present invention are:
- 2-mercaptobenzimidazole zinc salt (VULKANOX ZMB2)BAYER®.
- 2-mercaptotoluilimidazole zinc salt.
- 2,2' thiodiethyl bis-(3,5 diterbutyl 4 hidroxyphenyl) propianate and
- pentaerythritol tetra bis (betalaurylthiopropianate).

The quantities and/or ratios used in the polymeric compositions are preferably within the following range: 0.25-15 phr.

Hereinafter, the invention will be described in order to illustrate said invention but without limiting its scope, through the following preparation procedure and application examples regarding the insulation polymer composition meeting the following requirements:

### Composition formulation, experimentation and preparation

All the above described components can vary within ample ranges. However, the composition object of the present invention is precisely the interaction between vinyl alcoxysilane and the inorganic filler and the polymer mixture used during the polymer composition mixing and/or preparation process. The wrong dose of silane or quantities below 0.5 to 5.0 hpr may be insufficient to offer the surface treatment to the inorganic filler, and quantities above this range can cause undesirable effects in the physico-mechanical properties after the vulcanization of the material.

The mixing can be performed in an internal blender such as the following ones: Banbury, Boiling Mixtrumat, and in continuous blenders such as : Farrel, Werner and Pfleider and Buss. The other components of the polymer composition are also mixed in the above mentioned mixing equipment, after the first addition of silane, filler and polymers. Once all the components of the different polymer composition expressed in the present invention are added, an intensive mixing of said components (all components must be mixed at the same time, this being in order to promote good dispersion) is conducted. The mixing period depends of the dispersion grade and on the mixing sequence used for each type of equipment. In summary, any known processing equipment, the main object in which is to ensure an intimate mixing of the essential components can be used. Additionally to the essential components, other components, such as UV stabilizing pigments and/or fungicides can be added. Said components must be carefully selected because they could interfere with the crosslinking system of the polymer composition.

The quantities and/or proportion of curing agent will depend on the desired crosslinking and/or the type of application; to the extent that the crosslinking agent is used in higher quantity and/or proportion, the crooslinking density will be higher and the final properties of the composition such as hardness, chemical attack resistance, abrasion resistance, oil resistance and electric properties will be improved. To the extent that the quantity and/or proportion of the curing agent is lower, the crosslinking density will diminish and thus the final properties will also be lower (loss of thermal stability at high temperatures and/or cable operation temperatures). The crosslinking density recommended to reach a good property balance will be 85% and/or above. Practically, typical crosslinking density values will be within an 85% to 95% range. The way to measure the crosslinking density is through the extraction of a non-dissolved crossling polymer in a solvent used to conduct the extraction, said procedure is conducted according to ASTM D 2765, Method C. Curing agent levels used in the present invention were from 0.5 phr to 10 phr, preferably from 1 phr to 6 phr or from 2 phr to 4.5 phr. The curing agents are constituted by organic peroxides and organic co-agents, the levels of which vary according to the crosslinking grade obtained.

The quantity and/or proportion of the process additives will depend on the rheological properties necessary to a good processing of the material during the mixing and extrusion of the material. The addition of said additives to help in the process must not affect the speed and crosslinking grade of the polymer composition. Said quantity and/or proportion of said process will be within the following range: between 0.25phr and 8 phr.

The present invention is not limited to the use of one unique type of component as process auxiliary, but it is possible to use a system of two and even three types of components. Said types of components can be conjugated of shapes and quantities in such a way a to obtain synergistic effects producing excellent rheological properties. The quantity and type of antioxidants used will depend basically on the application and/or operation temperatures to which the polymer compositions will be submitted. The preferred antioxidants are: zinc salt, 2-mercaptobenzimidazole, pentaerythritol tetra bis (betalaurylthiopropianate) and 2,2' thiodiethyl-bis-(3,5 diterbutyl 4 hidroxyphenyl) propianate. The levels and/or quantities used in this antioxidant system is preferably from 0.25 phr to 15 phr or from 1.5 hpr to 12 hpr. The ratio of one to the other will be within the following range: from 1:1 to 3:1 and from 1:1 to 2.5:1.

The way to carry out the crosslinking of polymer compositions can be through the use of conventional crosslinking processes if they do not affect the speed and crosslinking grade and thus the final properties.

As a final result, the objective is to obtain polymer compositions that meet the following requirements:
- Tilted and/or vertical flame propagation resistance according to standard ISO 6722 and RENAULT 36-05-009J, respectively.
- Sufficient thermal stability to stand aging temperatures in oven of 3000 hours at 150°C +/-3°C and 240 hours at 180°C., +/-3°C.
- Electrical properties for included voltages lower or equal to 600 volts and voltages lower or equal to 5000 volts.
- Resistance to oil according to ASTM 1 and the following conditions of temperature and immersion period: 136°C during 48 hours.
- Resistance to fluids according to ISO 6722 and RENAULT 36-05-009J.
- The polymer compositions shall not discolor and/or stain copper and should not change the shade at the time of conducting the curing of said compositions.
- The compositions must present good rheological characteristics so that said compositions be mixed and extruded at high line speeds.

### GENERAL EXAMPLE

An ethylene and vinyl ester of C2-C6 aliphatic carboxylic acid copolymer was prepared, preferably ethylene ― vinyl acetate (EVA) in a 3% to 90% and preferably 3 to 12% proportion of vinyl acetate, and the rest being ethylene, the mixing was conducted in the following way:
- Mixing in a Banbury, under controlled conditions of temperature and mixing time (100°C to 135°C of material unloading temperature with a mixing period of 3 to 6 minutes). The mixing period and the mixing temperature are limited by the quality and dispersion grade of the component. Once mixed, the polymer compositions are rolled and granulated for extrusion.
- When the tests are conducted on a plate, they are molded according to the sum of the curing times at 90% determined on the rheometer ODR Monsanto at a temperature of 180°C. The objective of this procedure is to ensure that for each type of formulations expressed in the example, a minimal crosslinking of 85% is obtained. The plates are molded under pressure in laboratory presses, the tensile strength and elongation at break are made according to the test method ASTM D 638; the crosslinking density was determined by ASTM M 638, Method C.
- When the tests are conducted as cable insulation, the insulating materials are applied on a continuous crosslinking machine CV which is an extruder Royle with a 65 mm diameter and L/D 15:1 and with extrusion screws with the compression ratio of 2.5:1 to 3.5:1 and a 65 m long vulcanization tube. At the time of the extrusion of the example formulations, a 20 mesh, 40 mesh and 60 mesh package was used, the extrusion temperature profiles used are from 90°C to 95°C in the extrusion chamber and from 100°c to 105°C in the head and die area, respectively. The extrusion speed is 30 rpm. The insulation thicknesses are 10 mils in 20 AWG gauges.
- Once the prototype cable are manufactured, the assessment of tensile strength and elongation at break retention properties after aging in oven under the following test conditions: 3000 hours at 150°C+/-3°C; 342 hours at 150°C; and 240 hours at 180°C ± 3°C.
- The electrical tests are determined according to ISO-6722 and ASTM D 150 standards.

### EXAMPLE 1

The following formulation was prepared according to what has been described above. The mixture contains a copolymer based on ethylene and vinyl acetate (12% VA and melting index 2.5 g/10min). With the following comparative formulations indicated in the table, the improvement regarding vertical flame propagation resistance is evidenced according to RENAULT 36-05-009J standard.

| Components | Formula 1 phr | Formula 2 phr | Formula 3 phr | Formula 4 phr |
|---|---|---|---|---|
| EVA copolymer | 100 | 100 | 100 | 100 |
| Decabromodiphenyl ether | 75 | - | - | - |
| FR-1808® | - | - | 75 | 20 |
| FR-1025® | - | 75 | - | - |
| Antimony Trioxide | 25 | 25 | 25 | 10 |
| Magnesium hidroxide treated with silane | | | | 75 |
| STRUKTOL TR016® | 2 | 2 | 2 | 2 |
| Zinc salt 2 Mercaptobenzimidazole | 6 | 6 | 6 | 6 |
| Stearically hindered phenol | 2 | 2 | 2 | 2 |
| HVA-2® | 1 | 1 | 1 | 1 |
| Alpha alpha'bis (terbutyl- peroxide diisopropylbenzene | 2 | 2 | 2 | 2 |
| FR-1808® is commercially known as a crystalline flame redardant. FR-1025® is commercially known as a crystalline flame redardant. The sterically hindered phenol used was 2,2'-thiodethyl bis (3,5 diterbutyl ―4-hidroxyphenyl) propianate. | | | | |

The composition was prepared according to the description presented in the summary of examples in the form of the cables.
The measured properties are: resistance to vertical flame
Propagation according to RENAULT 36-05009J standard. The results obtained after the evaluation are as follows:

| Characteristic | Unit | Formula 1 | Formula 2 | Formula 3 | Formula 4 |
|---|---|---|---|---|---|
| Vertical flame propagation according to RENAULT 38605-009J | s | Does Not Extinguish itself | Extinguishes itself in 15 seconds | Extinguishes itself in 4 seconds | Extinguishes itself in 2 seconds |

The results are satisfactory and show that the halogenated flame retardant materials used are appropriate to meet the requirements of the Flame Test according to RENAULT standard. The operation voltages for this type of composition are from 600 volts to 5000 volts according to ASTD D150.

### EXAMPLE II

Example I formula 3 is repeated, the only modification being the type and quantity of antioxidant. El antioxidant used was tetra [methylen (3,5 di-terbutyl-4-hidroxyhidrocinnamate)] methane in order to carry out a comparative study to demonstrate that the antioxidant 2,2' bis (3,5―terbutyl―4―hidrophenyl) propianate is able to withstand short period (240 hours) and long period (3000 hours) aging in oven at different test temperatures (150°C and 180°C).
The measured properties are: tensile strength and elongation at break, tensile strength and elongation at break retention.
The composition was prepared according to the description presented in the example summary in the shape of a cable.
The results are shown in the following table:

| **Characteristics** | Unit | Example I | Example II |
|---|---|---|---|
| Tensile strength | Psi | 2756 | 2805 |
| Elongation at break | % | 425 | 421 |

| **Oven aging 3000 hours at 150°C** | | | |
|---|---|---|---|
| * Tensile strength | Psi | 3452 | 3856 |
| * Elongation at break | % | 129 | 22.5 |

| **Oven aging 240 days at 165°C** | | | |
|---|---|---|---|
| * Retained tensile strength | % | 103 | 38 |
| Retained elongation at break | % | 95 | 12 |

The results show that using 2'2 thiodethyl bis (terbutylthio-4-hidrophenyl) propianate antioxidant, formula 1, good thermal stability is obtained. As a result, it is also to be observed that the polymer composition of example I does not discolor and/or stain copper once the material is vulcanized. It is also important to notice that the original shape of the material does not change after the vulcanization.

### EXAMPLE III

Four comparative formulations were prepared, Formula I of example I, and three other formulation using the following polymers:
1. Vinyl ethylene copolymer (9% VA; melting index 2.2 g/10 min)
2. Combination of vinyl ethylene (12% VA; melting index 2.5 g/10 min) and INSITE® polyolefin (melting index 0.75 g/10 min).
3. Combination of vinyl ethylene (12% VA; melting index: 2.5 g/10min) and a high density polyethylene with melting index of 0.5 g/10 mm of needle diameter:

| FORMULATION | CYCLES |
|---|---|
| 1 of example I | 24 |
| 9% VA | 45 |
| 12% VA plus INSITE® polyolefin | 128 |
| 12% VA plus high density polyethylene 05 g/10min | 325 |
| INSITE® polyolefin is manufactured according to the commercial process known as INSITE patented by DOW CHEMICAL. | |

For this type of reduced wall cable, the required value is 100 cycles. According to the result obtained with the invention, the combination of INSITE® polyolefins and high density polyethylene, a substantial increase regarding abrasion resistance with needle is obtained. We do not wish to limit the present invention to this result.

### EXAMPLE IV

Five comparative formulations were prepared, Formula 1 of example I, and four other formulations using the following polymers:
1. Combination of 26% vinyl ethylene (12% VA; melting index 2.5 g/10min) and 9% INSITE® polyolefin (melting index: 0.75 g/10 min).
2. Combination of 26% vinyl ethylene (12% VA; melting index 2.5 g/10min) and 9% high density polyethylene with melting index of 0.5 g/10 min.
3. Combination of 26% vinyl ethylene (12% VA; melting index 2.5 g/10min) and 9% acrylic ethylene copolymer VAMAC D®.

As a result of these formulations applied as insulating material on cables 22 AWG type TXL according to FORD S97GG14401 AA and WSS22P7A3 specifications, the following results of resistance to oil absorption were obtained:

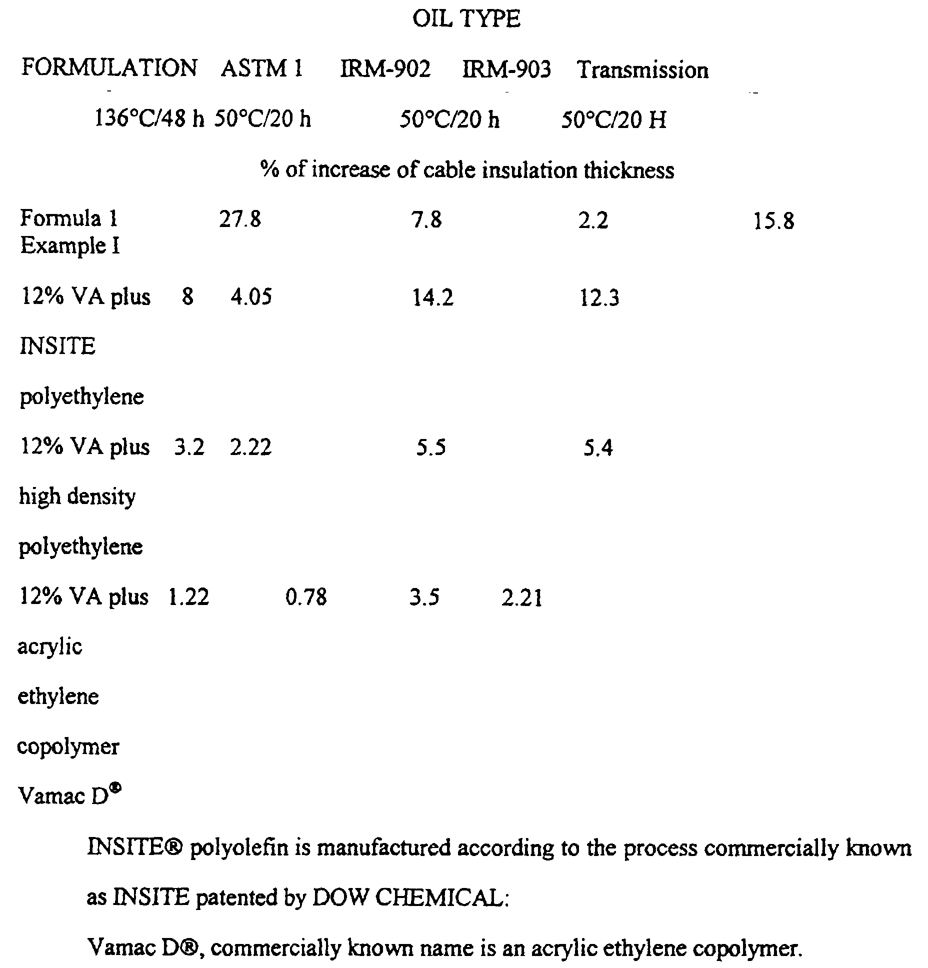

According to the results obtained with the inclusion of INSITE polyolefins, high density and acrylic copolymers, a substantial increase of the resistance to oil absorption is shown.

### EXAMPLE V

Taking as basis all the formulations of the previous examples, a global polymeric composition is obtained through which all the synergistic effects are reached with regard to hot oil resistance, needle abrasive strength, vertical flame propagation resistance and especially better thermal stability at 150°C during 3000 hours.

| Components | Formula 1 phr | Formula 2 phr | Formula 3 phr |
|---|---|---|---|
| EVA copolymer | 50 | 50 | 50 |
| High density polyethylene | 40 | 40 | 40 |
| Ethylene acrylic copolymer | 10 | 10 | 10 |
| FR-1808® | 40 | - | 20 |
| FR-1025® | - | 40 | |
| Antimony Trioxide | 20 | 20 | 10 |
| Magnesium hydroxide treated with alcoxysilane | - | - | 75 |
| Silicon oil | 3 | | 3 |
| STRUKTOL TR 060® | 1 | 1 | 1 |
| STRUKTOL TRO 16® | 0.5 | 0.5 | 0.5 |
| Zinc salt,2 Mercaptobenzimidazole | 6 | 6 | 6 |
| Stearically hindered phenol | 2 | 2 | 2 |
| HVA-2 ® | 1 | 1 | 1 |
| Alpha alpha'bis (terbutyl- peroxide diisopropylbenzene | 2 | 2 | 2 |
| FR-1808® is commercially known as a crystalline flame redardant. FR-1025® is commercially known as a crystalline flame redardant. The stearically hindered phenol used was 2,2' thiodiethyl (3,5 - diterbutyl- 4 ― hydroxyphenyl) propianate. STRUKTOL TR 016® is commercially known as a mixture of metallic soaps of fatty acids with an amide. STRUKTOL TR 060 ® is a commercial product of aliphatic resin. | | | |

The results obtained after the assessment are as follows:
• The measured properties were: resistance to vertical flame propagation according to RENAULT 36-05-009J standard.

| Characteristic | Unit | Formula 1 | Formula 2 | Formula 3 |
|---|---|---|---|---|
| Vertical flame propagation according to RENAULT 36-05-009/J | S | Extinguishes itself in 25 seconds | Extinguishes itself in 15 seconds | Extinguishes itself in 4 seconds |

• The results are good and show that the halogenated flame retardant material used is adequate to meet the requirements of the Flame Test according to RENAULT standard.
• The results obtained show that, through the use of thermal stabilizers proposed in the present example, good results were obtained during prolonged exposition in a oven at a temperature of 150°C during 3000 hours according to RENAULT 36-05-009J, FORD S97GG 14401-AA, WSS 22P7A3 and ISO 6722 standards (all the compositions were extruded in a thin walled gauge 22 AWG, and were assessed according to the above mentioned standards, as insulation for all-copper core cables). As a result we can also state that the three polymer composition of example V do not discolor and/or stain the copper once the material is crosslinked, and it is also clear that the original shade of the material is not altered.

As a consequence of the application of said formulations as insulation in thin 22 AWG cable according to RENAULT 36-05-009J specification, the following abrasion resistance results are obtained (7N applied weight, and 0.45 mm needle diameter).

| FORMULATION | CYCLES |
|---|---|
| Formula 1 | 256 |
| Formula 2 | 305 |
| Formula 3 | 154 |

For this type of reduced wall cable the required value is 100 cycles; according to the result obtained with the present invention, high density polyethylenes offer a substantial increase with regard to the needle abrasion resistance.

| OIL TYPE | | | | |
|---|---|---|---|---|
| FORMULATION | ASTM 1 136°C/48h | IRM-902 50°C/20h | IRM-903 50°C/20 h | TRANSMISSION 50°C/20 h |
| | | | | |

| % of increase of cable insulation thickness | | | | |
|---|---|---|---|---|
| Formula 1 | 9.2 | 4.2 | 12.5 | 15.8 |
| Formula 2 | 8 | 3.75 | 9.2 | 11.4 |
| Formula 3 | 2.89 | 3.12 | 4.5 | 6.4 |

## Claims

1. A polymer composition based on crosslinkable polyolefins with high service thermal coefficient in automotive cable, comprising an ethylene and vinyl ester C₂₋₆ aliphatic carboxylic acid copolymer (EVA) consisting of 3% to 90% of vinyl ester and the rest being ethylene; the composition includes besides a mixture of additives that increases the thermal coefficient at service temperatures of up to 150° C in electric cables and conductors exposed to high temperature zones in internal combustion engines and that also improves the following properties: resistance to hot oils, abrasion resistance, and resistance to vertical flame propagation after crosslinking said composition, the mixtures ratio being: copolymer (EVA) up to 50 parts/100 polymer resin (phr), high density polyethylene up to 40 phr, ethylene acrylic copolymer up to 10 phr, halogenated compounds of octabromo tri methyl phenyl indane 0-40 phr;(FR-1808®) depentabromo benzyl acrylate monomer 0-40 phr (FR-1025®); antimony trioxide 10-20 phr, magnesium hydroxide treated with alcoxysylane 0-75 phr; silicon oil 0-3 phr, aliphatic resin STRUKTOL TR 060® 1 phr, fatty acid and amides metallic soaps (STRUKTOL TR 016®) 0.5 phr; stearically hindered phenol 2 phr; zinc salt 2 mercapto benzylimidazole 6 phr; co-agent n,n'-m-phenylene dimaleic (HVA-2®)1 phr and an alpha, alpha'bis (terbutyl peroxide) diisopropyl benzene agent, 2 phr.

2. The polymer composition according to claim 1, where in the copolymer (EVA), is preferably a mixture of ethylene and vinyl acetate copolymer in a proportion of 3 to 45% and the rest is ethylene with melting indexes within a range of 0.5 to 5 g/10 min.

3. The polymer composition according to claim 2, where in the polyethylene copolymer can also be selected among: polypropylene, copolymers and terpolymer of ethylene propylene and acrylic copolymers.

4. The polymer composition according to claim 1, where in the halogenated compounds can be selected among the following: hexabromo benzene, tetrabromobisphenol A, tetrachlorobisphenol A, anhydride tetrabromophtalate, hexabromo cyclodecane, octabromodiphenyl, perchloropentacyclodecane, octabromodiphenyl ether, decabromodiphenyl ether, tribromo phenyl allyl ether, pentabromo ethylbenzene, 2,4-6-tribromophenol, pentabromodiphenyl ether, ethylene bis (tetrabromophtalimide), anhydride tetrachlorophtalic, poly(pentabromobenzyl)acilate, tetrabromobisphenol A bis (dibromopropyl) ether, and Diels-Alder by-product of hexachlorocyclopentadiene with anhydride maleic, which promote grafting onto the polymer composition.

5. The polymer composition according to claim 1, where in the magnesium hydroxide treated with an alcoxysilane can be selected among vinyl trimethoxysilane, phenyl tris (2 methoxyethoxy) silane, ethyl methyl tris (2-methoxyethoxy) silane, dimethyl diethoxysilane, ethyl trimethoxysilane and vinyl trimethoxysilane.

6. The polymer composition according to claim 5, where in vinyl trimethoxyethoxysilane and vinyl trimethoxy silane are preferably used, wherein the ratios of alcoxysilanes to magnesium hydroxide are within the range of 0.5 to 5 phr.

7. The polymer composition according to claim 1, where in the polymer composition is crosslinked through dicumyl peroxide, 2,5-(ter-butylperoxy)-, -2,5-dimethylhexin-3, diter-butyl peroxide, 2,5-(terbutylperoxy), -2,5-dimethylhexane, and terbutyl cumyl peroxide and preferably alpha,alpha'-bis (terbutyl peroxide) diisopropyl benzene; with the combination of co-agent compounds such as: triallyl cyanurate, triallyl isocyanurate, diallyl maleate, diallyl phtalate, pentaerythritol triacrylate, pentaerythritol tetracrylate, trimethylol propane triacrylate, trimethylol propane, trimethacrylate, tetraethylene glycol dimethacrylate, low molecular weight polybutadiene and n,n'-m-phenylenedimaleic (HVA-2®) in a ratio of 0.5-10 phr to the crosslinking agent.

8. The polymer composition according to claim 1, where in additives of fatty acids or derivatives of said fatty acids, and preferably a mixture metallic soaps of fatty acids and an amide mixed with a low molecular weight silicon oil and an aliphatic resin wherein: the ratios used in each system of fatty acid to silicon oil are from 1:1 to about 1:6 and preferably 1:3, and the ratios of aliphatic resin to fatty acid are from 1:1 to about 1:6 and preferably the ratio of hydrocarbonated resin to fatty acid is 1:3; the total quantity of the process additives is within the range of 0.25 phr up to 8 phr of the total polymer composition.

9. The polymer composition according to claim 1, where in the antioxidant agents used are pentaerythritol tetra bis (betalauryl thio propianate) and preferably 2-mercaptobenzilimidazole and 2,2'-thiodiethyl bis (3,5 diterbutyl 4-hidroxyphenyl) and they are used in ratios to the polymer composition preferably within the range of 0.25-15 phr.

10. The polymer composition according to claim 1, where in said composition consists preferably of a mixture of:
| | |
|---|---|
| • EVA copolymer | 50 phr |
| • High density polyethylene | 40 phr |
| • Ethylene acrylic copolymer | 10 phr |
| • Halogenated compound (FR 1808®) | 40 phr |
| • Antimony trioxide | 20 phr |
| • Silicon oil | 3 phr |
| • aliphatic resin (STRUKTOL TR 060 ®) | 1 phr |
| • Metallic soaps of fatty acids with amide (STRUKTOL TR 016 ®) | 0.5 phr |
| • Zinc salt 2-mercaptobenzimidazole (VULCANOX ZMB2) ® | 6 phr |
| • stearically hindered phenol | 2 phr |
| • co-agent (HVA-2 ®) | 1 phr, and |
| • alpha, alpha' bis (terbutylperoxide) diisopropyl benzene | 2 phr |

11. The polymer composition according to claim 1, where in said composition is preferably a mixture of:
| | |
|---|---|
| • EVA copolymer | 50 phr |
| • High density polyethylene | 40 phr |
| • Ethylene acrylate copolymer | 10 phr |
| • Halogenated compound (FR-1025®) | 40 phr |
| • Antimony trioxide | 0 phr |
| • Silicon oil | 3 phr |
| • Aliphatic resin (STRUKTOL TR 060 ®) | 1 phr |
| • Mixture of metallic soaps of fatty acids with amide | 1 phr |
| • (STRUKTOL TRO 16®) | 0.5 phr |
| • zinc salt 2-2 mercaptobenzimidazole (VULCANOX ZMB2®) | 6 phr |
| • stearically hindered phenol | 2 phr |
| • co-agent (HVA-2®) | 1 phr and |
| • alpha, alpha'bis (terbutyl peroxide) diisopropyl benzene | 2 phr. |

12. The polymer composition according to claim 1, where in said composition is comprising preferably a mixture of:
| | |
|---|---|
| • EVA copolymer | 50 phr |
| • High density polyethylene | 40 phr |
| • Ethylene acrylate copolymer | 10 phr |
| • Halogenated compound (FR-1808®) | 20 phr |
| • Antimony trioxide | 10 phr |
| • Magnesium hydroxide treated with alcoxysilane | 75 phr |
| • Silicon oil | 3 phr |
| • Aliphatic resin (STRUKTOL TR 060 ®) | 1 phr |
| • Mixture of metallic soaps of fatty acids with amide (STRUKTOL TRO 16 ®) | 0.5 phr |
| • stearically hindered phenol | 2 phr |
| • zin salt 2-2 mercaptobenzimidazole (VULCANOX ZMB2 ®) | 6 phr |
| • co-agent (HVA-2®) | 1 phr and |
| • alpha, alpha'bis (terbutyl peroxide) diisopropyl benzene | 2 phr. |

13. Process to prepare a polymer composition based on crosslinked polyolefins with high service thermal coefficient of up to 150°C, for automotive cable according to claims 1 to 12, that includes mixing an EVA copolymer, based on ethylene and vinyl ester of C₂₋₆ aliphatic carboxylic acid copolymer in a ratio of 3-90% of vinyl ester, the rest being ethylene, characterized because an additive mixture is incorporated that increases the service thermal coefficient in the electric conductors and cables that are located in high temperatures zones in internal combustion engines, and that also increases the resistance to hot oils, abrasion resistance and resistance to vertical flame propagation, wherein said mixing is conducted at temperatures of 110°C ― 135°C during 3-6 minutes; being said addition of active compounds based on organic fillers of halogenated compounds and antimony trioxide in a ratio from 2:1 to 5:1, preferably from 2.5:1 to 4:1; interaction of vinyl alcoxysilane with inorganic filler and mixture of used polymers, (EVA) copolymers, high density polyethylene, and ethylene acrylate copolymer, the mixing is conducted in a ratio of 0.5 to 5 phr; addition of process additives preferably aliphatic resin, silicon oil in the ratio of 0.25 phr up to 8 phr; addition of antioxidant, preferably zinc salt 2-2 mercaptobenzimidazole and 2,2'thiodiethyl bis (-3,5 diterbutyl 4-hidroxyphenyl) propianate or pentaerythritol tetra bis (betalauryl thio propianate) in a ratio of 0.25-15 phr; after the first addition of silane, charge, polymers and addition of dicumyl peroxide and alpha, alpha-bis (terbutylene peroxide) diisopropyl benzene in combination with co-agents, preferably n,n'-m-phenylene dimaleic in a ratio of 0.5-10 phr, once added all the components an intensive mixing of the composition is conducted until dispersion is complete; once mixed, the composition is rolled and granulated for extrusion.

14. The process according to claim 13, where in the halogenated organic filler are bromated compounds that do not generate toxic dioxines and furans during combustion and preferably the following compounds are used: octabromotrimethylphenyl indane with melting points of 240°C ― 256°C (FR-1808®) and a pentabromo benzyl acrylate monomer with melting points of 117°C ― 120°C (FR-1025®).

15. The process according to claim 13, where in the polymer component (EVA) is preferably an ethylene and vinyl acetate copolymer in a ratio preferably of 2 to 3% of acetate, the rest being ethylene.
